# EUROPEAN PATENT APPLICATION

(11) **EP 1 345 147 A2**
(43) Date of publication of application: **17.09.2003**
(21) Application number: 03251422.6
(22) Date of filing: 08.03.2003
(51) Int. Cl.: G06F 17/60

(54) **Method and apparatus for the administration of a benefits scheme**

(30) Priority: 13.03.2002 GB 0205894
(71) Applicant: Vebnet Limited, Edinburgh, EH3 8EG (GB)
(72) Inventor: Thurlow, Stephen Vebnet Limited, Edinburgh EH3 8EG (GB)
(74) Representative: Murnane, Graham John

(57) **Abstract**

An apparatus for administering a benefits scheme on behalf of a plurality of members of an organisation. The apparatus comprises: storage means for storing a total allowance allocated to each member; an output device adapted to present a plurality of benefits (14) to at least one member (22), each benefit (14) having one or more options, and the or each option having a cost; and an input device adapted to receive the or each option selected by the or each member (24), the or each option to be stored by the storage means. The apparatus further comprises processing means adapted to calculate and summate the cost of the or each option, and further adapted to deduct the summation from the total allowance of the or each member, the resulting value to be presented to the or each member by the output device.

## Description

The present invention relates to an apparatus and method for the administration of benefits. In particular, but not exclusively, the invention relates to the administration of fixed, flexible or mixed benefits using a computer.

Many companies offer benefits packages to their employees as a reward or incentive that is additional to their salary. These benefits can include pensions, life assurance, medical insurance, disability insurance, share options, and other forms of financial products.

The management and administration of such packages can require the use of a significant amount of the company's resources. The packages must be sourced, set up, and administered. Administration requires the co-operation of the company's payroll and Human Resources activities. The system can be complex, and the processing of an employee's choices and the calculation of many different factors and outcomes can be time consuming.

A number of software packages exist to simplify the system and reduce the time taken to process data. However, these packages are all based on the financial products to which the employee is entitled. An allowance for each employee is used to calculate the benefits from each product. Thus the overall cost of the benefits is more difficult to predict by the employee or the employer. The available options within a product will tend to be dependent on the grade or length of service of the employee.

Many of the software packages also lack integration with the company's payroll and Human Resources departments. Therefore, considerable time is still consumed to calculate the effect of the benefit choices on salaries.

Existing software packages only allow for the administration of either flexible or fixed benefits. The administration of mixed benefits cannot be performed using one software package.

The software packages may also have other disadvantages. They are often provided as a fixed code on a medium such as a Compact Disc and cannot be altered to suit the personal requirements of an organisation. Other financial packages cannot be added or the existing financial packages deleted.

According to a first aspect of the present invention there is provided an apparatus for administering a benefits scheme on behalf of a plurality of members of an organisation comprising:
storage means for storing a total allowance allocated to each member;
an output device adapted to present a plurality of benefits to at least one member, each benefit having one or more options, and the or each option having a cost;
an input device adapted to receive the or each option selected by the or each member, the or each option to be stored by the storage means;
processing means adapted to calculate and summate the cost of the or each option, and further adapted to deduct the summation from the total allowance of the or each member, the resulting value to be presented to the or each member by the output device.

Preferably the plurality of benefits comprises flexible benefits, whereby each benefit has a plurality of options. The plurality of benefits may further comprise fixed benefits, whereby each benefit has one option. Alternatively, the plurality of benefits may comprise only fixed benefits. Preferably the plurality of benefits includes at least one of pensions, life assurance, medical insurance, disability insurance, share options, remuneration or cash equivalents.

The organisation may be a company or group of companies, and the members may be staff members or employees of the company or group of companies.

The cost of the or each option may be defined as greater than zero. Alternatively, the cost may be defined as less than or equal to zero.

Preferably the apparatus comprises a computer. Preferably the apparatus further comprises a computer program.

Preferably the computer program is provided on a server computer system. Preferably the server computer system is connected to at least one remote client computer system. Preferably the server computer system is adapted to send information to and retrieve information from the or each remote client computer system.

Preferably the server computer system is connected to the or each remote client computer system over the Internet. Preferably the plurality of benefits are presented on one Internet page. Alternatively, the server computer system is connected to the or each remote client computer system over an intranet.

Alternatively the computer program is provided on a computer medium, such as a Compact Disc.

Preferably the computer program is capable of being modified to vary the benefits presented. Preferably the computer program is capable of being modified to vary the options of each benefit presented.

Preferably the apparatus is adapted to report the or each option selected by the or each member.
Preferably the reports are output in one of a plurality of specified formats.

Preferably the apparatus is further adapted to calculate and report other forms of data.
Preferably this data includes at least one of the premiums payable for each benefit, the salary deduction of the or each member, the frequency that each option is selected by the members, and the date on which the options are selected by the or each member. Preferably the data may be filtered by the Administrator.

Preferably the storage means is further adapted to store other details for the or each member.
Preferably the details includes at least one of bank details, salary, grade, length of service and bonuses payable.

Preferably the output device is further adapted to present at least one message to the or each member. Preferably a message is presented to the member if the resulting value is less than a specified negative value. Alternatively a message is presented to the member if the resulting value is less than zero.

Preferably the options are selected by the member at least once a year.

According to a second aspect of the present invention there is provided a method for administering a benefits scheme on behalf of a plurality of members of an organisation comprising the steps of:
allocating and storing a total allowance for each member;
presenting a plurality of benefits to at least one member, each benefit having one or more options, and the or each option having a cost;
receiving and storing the or each option selected by the or each member;
calculating the cost of the or each option;
summating the cost of the or each option; and
deducting the summation from the total allowance of the or each member and presenting the resulting value.

Preferably the plurality of benefits comprises flexible benefits. The plurality of benefits may further comprise fixed benefits. Alternatively, the plurality of benefits may comprise only fixed benefits. Preferably the plurality of benefits includes at least one of pensions, life assurance, medical insurance, disability insurance or share options.

The cost may be greater than zero. Alternatively, the cost may be less than or equal to zero.

Preferably at least one step of the method for administering a benefits scheme is performed using a computer. Preferably the computer is adapted to perform the method by a computer program.

Preferably the method is performed using a server computer system connected to at least one client computer system. Preferably the method is performed over the Internet. Alternatively, the method is performed over an intranet. Alternatively the method is provided on a computer medium, such as a Compact Disc. Preferably the plurality of benefits are presented on one Internet page. Preferably the plurality of options for each benefit are presented on one Internet page.

Preferably the benefits scheme is administered by an Administrator. Preferably the Administrator is a member of the organisation. Alternatively, the Administrator is the provider of the computer program. Alternatively, the Administrator is an Independent Financial Advisor.

Preferably the benefits scheme is administered by an Administrator using a server computer system. Alternatively the benefits scheme is administered by an Administrator using a client computer system. Preferably the computer program is capable of being modified by the Administrator to vary the benefits presented. Preferably the computer program is capable of being modified by the Administrator to vary the options of each benefit presented.

Preferably the method further comprises reporting the or each option selected by the or each member to the Administrator. Preferably the reports are output in one of a plurality of formats specified by the Administrator.

Preferably the method further comprises calculating and reporting other forms of data. Preferably this data includes at least one of the premiums payable for each benefit, the salary deduction of the or each member, the frequency that each option is selected by the members, and the date on which the options are selected by the or each member.
Preferably the data may be filtered by the Administrator.

Preferably the method further comprises storing other details for the or each member. Preferably the details includes at least one of bank details, salary, grade, length of service and bonuses payable.

Preferably the method further comprises presenting at least one message to the or each member.
Preferably a message is presented to the member if the resulting value is less than a specified negative value. Alternatively a message is presented to the member if the resulting value is less than zero.

Preferably the options are selected by the member at least once a year.

An embodiment of the present invention will now be described, by way of example only, with reference to the accompanying drawings, in which:
Fig. 1 is a flowchart of a method for administering benefits in accordance with one aspect of the present invention; and
Fig. 2 is a flowchart of part of the method of Fig. 1.

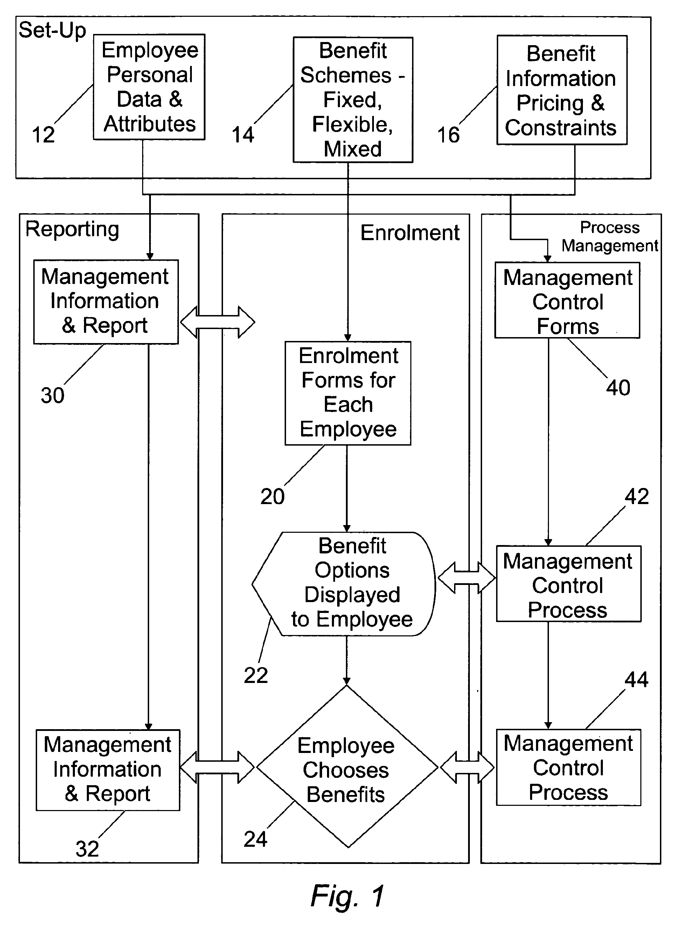

Fig. 1 shows an overview of the method for administering benefits. The method is used to administer benefits for a company or organisation that has a number of members or employees. Typical benefits include pensions, life assurance, medical insurance, disability insurance or share options.

The method is typically implemented as a computer programme provided on a computer. The programme is typically provided on a server computer system and accessed using a number of remote client computer systems. The client and server computer systems can be connected over the Internet. Alternatively the server and client computer systems can be connected over an intranet. The programme may also be provided on a compact disc or other computer medium.

The method first requires to be set up 10 with all the relevant information. This information includes personal data and attributes 12 for each employee. The employee personal data includes salary, age, dependants, dependent age and company service. Personal data for each employee can be obtained from the company's Human Resources and payroll systems. The attributes of each employee will include details such as grade, length of service and bonuses payable. From the employee's personal details and attributes, a total allowance for each employee can be determined. Thus the total allowance for each employee has been allocated and is stored.

The nature 14 of the benefit schemes (fixed, flexible or mixed) is also specified. For each employee, the constraints 16 imposed on the employee by the benefit scheme and the available options for each product are set. The price details, or cost, for each benefit, and for each option within the benefit, are also specified.

As the method is implemented over the Internet, and not by a fixed computer code, the type of benefits, or the options within the benefits may be modified at any time by the Administrator.

The set up information 10 is used to derive benefit entitlements for each employee, the constraints imposed on the employee by each benefit scheme and the available options to the employee within each product of the benefit scheme. This data is presented to an employee within an enrolment form 20 during an enrolment procedure. This enrolment procedure is typically organised on an annual basis.

Typically, the list of the benefits available to the employee are presented on one internet page. Each benefit can be selected by the employee which causes the list of options for each benefit to be displayed to the employee 22. Typically, the list of the options available to the employee are presented on one internet page. The employee selects the option desired within the constraints of the benefit scheme. The employee's selections are received and stored. The cost of each option can then be calculated and the costs summated. The summation is deducted from the total allowance of the employee.

The programme is administered by an Administrator. Typically, the Administrator will be a member of the company who has responsibility for the task. However, the Administrator may be the supplier of the computer program or an Independent Financial Advisor.

If desired the set up information 10 can be used by the Administrator to generate management reports 30. The reporting of the set of information 10 allows an assessment of the total cost to the employer prior to an employee making any choices. The benefit choices of the employee and the effect on the employee's salary can also be calculated and further management reports generated 32. The reports of the employee's benefit choices 32 allows the Administrator to identify the premiums payable to the product providers. Other reports that can be generated include costs to the employee, product take-up rates, monthly payroll reports and mid-term adjustment reports for product providers. Reports with fields, defined by Administrator can be generated using selected date filters.

The enrolment process may be monitored by the Administrator to identify whether an employee has opened 40, processed 42 or submitted 44 their benefit choices. Therefore, employees who have not submitted their choices may be reminded to do so. Enrolment forms can be re-opened, approved or submitted on behalf of employees by the Administrator.

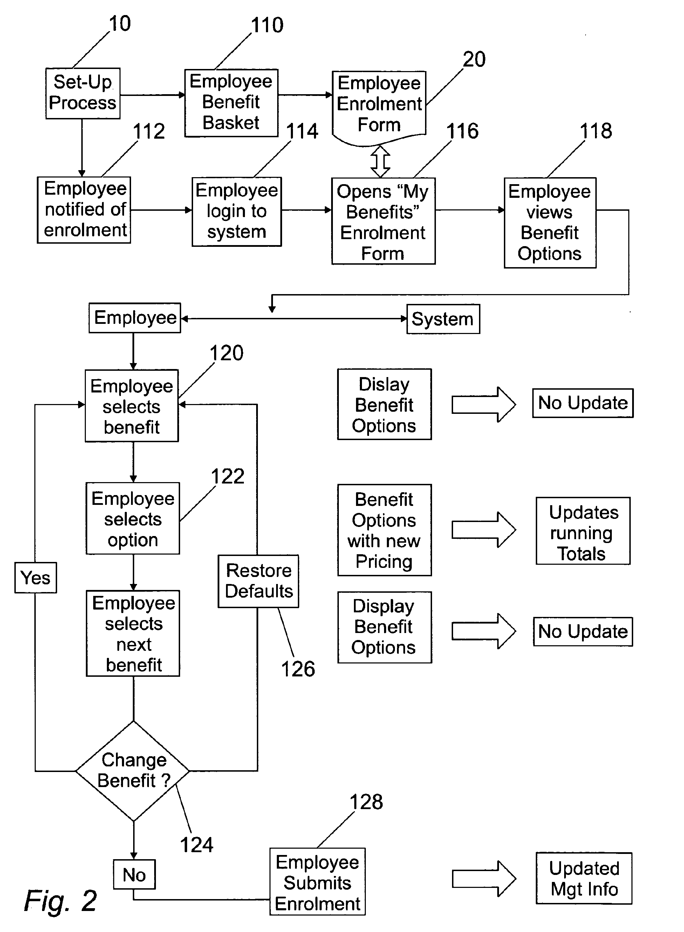

Fig. 2 shows a more detailed flow chart for the method of administering benefits. Information from the set up process 10 is used to establish an employee benefit basket 110 that is specific for each employee. This employee benefit basket 110 represents the total allowance for each member and the benefits available, as well as the options available within each benefit. This information is used to create the employee enrolment form 20.

At the start of the enrolment process, each employee is notified 112 that they are required to complete the enrolment form. The employee then logs onto the system 114, connecting to the server computer using a client computer system. The employee is presented with a welcoming screen which includes a link called "my benefits". Other information presented may be options to view personal employment details, current benefits, benefit related messages, information relating to holidays or information about the company.

Selection of the "my benefits" link presents the employee with the enrolment form and the employee can then view the options for each benefit 118. The employee can select the benefits 120 and the options within each benefit 122. As these choices are made, the total spending on benefits is calculated and displayed. Employees can repetitively modify the selections made 124 as they see the effect of the choices on the total benefit spending.

It is to be appreciated that benefits may be mixed and matched up to the total allowance for the employee and within the rules of the benefit scheme. The employee's allowance is for the total spending on benefits rather than within each type of benefit. This provides greater flexibility and transparency for the employee.

Spending may be up to the limit of the total benefit allowance. Further spending may also be allowed by sacrifice of part of the employees salary and this value of salary sacrifice is displayed. A warning message may be provided if the total spending is greater than a specified limit (for example, three percent of basic salary). For some of the products, the employee may be entitled to receive a cash payment instead of the benefit. In these cases, the amount of the cash entitlement is displayed.

Each benefit displayed will include a description, the core benefit (minimum option) and the employee's entitlement for this benefit. Each listed benefit includes a change button and the benefits may be modified by selecting this option. When this button is selected, more detailed information about the product may also be displayed.

The benefits may be displayed with default values shown for guidance or convenience. The employee has the option of restoring these default values 126 during the benefit selection procedure. Some benefits that are displayed may be for information only.

The choices of the employee can be saved without being submitted. This allows the employee to submit the enrolment form at a later date. Once the employee is satisfied with the selections made, the employee submits the enrolment form 128. The submitted form is automatically sent to the Administrator in one of a number of formats, such as HTML, Excel or as a hard printed copy. From the time of submission, the submitted enrolment form cannot be modified by the employee, though it may be modified by the Administrator. The effects of the employee's choices on salary are calculated and the information can be used to generate a management report or may be sent directly to the company's payroll system.

Various modifications and improvements can be made without departing from the scope of the present invention.

## Claims

1. An apparatus for administering a benefits scheme on behalf of a plurality of members of an organisation comprising:
storage means for storing a total allowance allocated to each member;
an output device adapted to present a plurality of benefits (14) to at least one member (22), each benefit (14) having one or more options, and the or each option having a cost; and
an input device adapted to receive the or each option selected by the or each member (24), the or each option to be stored by the storage means,
**characterised in that** the apparatus further comprises:
processing means adapted to calculate and summate the cost of the or each option, and further adapted to deduct the summation from the total allowance of the or each member, the resulting value to be presented to the or each member by the output device.

2. An apparatus as claimed in Claim 1, wherein the plurality of benefits (14) comprises flexible benefits, whereby each benefit (14) has a plurality of options.

3. An apparatus as claimed in Claim 1 or 2, wherein the plurality of benefits (14) includes at least one of pensions, life assurance, medical insurance, disability insurance, share options, remuneration or cash equivalents.

4. An apparatus as claimed in any preceding claim, wherein the apparatus comprises a computer.

5. An apparatus as claimed in any preceding claim, wherein the apparatus comprises a computer program.

6. An apparatus as claimed in Claim 5, wherein the computer program is provided on a server computer system, and wherein the server computer system is connected to at least one remote client computer system.

7. An apparatus as claimed in Claim 6, wherein the server computer system is connected to the or each remote client computer system over the Internet, and wherein the plurality of benefits (14) are presented on one Internet page.

8. An apparatus as claimed in any of Claims 5 to 7, wherein the computer program is capable of being modified to vary at least one of the benefits (14) and the options of each benefit (14) presented.

9. An apparatus as claimed in any preceding claim, wherein the apparatus is adapted to report the or each option selected by the or each member, and wherein the reports are output in one of a plurality of specified formats (30).

10. An apparatus as claimed in Claim 9, wherein the apparatus is further adapted to calculate and report other forms of data (32), and wherein the other forms of data includes at least one of the premiums payable for each benefit (14), the salary deduction of the or each member, the frequency that each option is selected by the members, and the date on which the options are selected by the or each member.

11. An apparatus as claimed in any preceding claim, wherein the storage means is further adapted to store other details for the or each member, and wherein the other details includes at least one of bank details, salary, grade, length of service and bonuses payable.

12. A method for administering a benefits scheme on behalf of a plurality of members of an organisation comprising the steps of:
allocating and storing a total allowance for each member;
presenting a plurality of benefits (14) to at least one member, each benefit (14) having one or more options, and the or each option having a cost; and
receiving and storing the or each option selected by the or each member,
**characterised in that** the method further comprises the steps of:
calculating the cost of the or each option;
summating the cost of the or each option; and
deducting the summation from the total allowance of the or each member and presenting the resulting value.
